# EUROPÄISCHE PATENTANMELDUNG

(11) **EP 2 071 206 A2**
(43) Veröffentlichungstag der Anmeldung: **17.06.2009**
(21) Anmeldenummer: 08021335.8
(22) Anmeldetag: 09.12.2008
(51) Int. Cl.: F16D 3/223

(54) **Aufnahmegehäuse für Gleichlaufgelenke**

(30) Priorität: 10.12.2007 DE 102007059637; 03.12.2008 DE 102008060329
(71) Anmelder: Ifa Technologies GmbH, 39340 Haldensleben (DE)
(72) Erfinder: Raguschke, Henning, 39343 Ackendorf (DE)
(74) Vertreter: Leinung, Günter

(57) **Zusammenfassung**

Die Erfindung betrifft ein Aufnahmegehäuse für Gleichlaufgelenke, welche als Fest- oder Verschiebegelenke ausgebildet sind, für den Einsatz in Kraftfahrzeugen zur Drehmomentenübertragung.

So wurde ein Aufnahmegehäuse für Gleichlaufgelenke geschaffen, welche als Fest- oder Verschiebegelenk ausgebildet sind, für den Einsatz in Kraftfahrzeugen zur Drehmomentenübertragung, die eingebundenen Gleichlaufgelenke 4 über ihre Außenringe 5 mit dem Aufnahmegehäuse 1 verbunden sind, wobei das Aufnahmegehäuse 1 in kombinierter Ausbildung aus einem Aufnahmegehäuseteil 2 mit im Aufnahmegehäuseteil 2 angeordneten Verschlussdeckel 10 besteht, im Aufnahmegehäuseteil 2 ein Gleichlaufgelenk 4 über den Außenring 5 zur Innenwandung des Aufnahmegehäuseteiles 2 kraft- und formschlüssig angeordnet ist und das Aufnahmegehäuseteil 2 sowie der Verschlussdeckel 10 mit unterschiedlich gestalteten Anschlusselementen 3 ausgebildet sind.

## Beschreibung

### Aufnahmegehäuse für Gleichlaufgelenke

Die Erfindung betrifft ein Aufnahmegehäuse für Gleichlaufgelenke, welche als Fest- oder Verschiebegelenke ausgebildet sind, für den Einsatz in Kraftfahrzeugen zur Drehmomentenübertragung.

Anordnungen von Gleichlaufgelenken in Aufnahmegehäusen oder Aufnahmeteilen sind aus dem Stand der Technik bekannt.

So beschreibt die 40 42 390 C 2 ein Gleichlauffestgelenk, welches in einer Hülse oder Glocke drehfest eingesetzt ist.
Die Glocke stützt das Außenteil vom Gleichlaufgelenk in radialer Richtung und zur Erzielung einer drehfesten Verbindung sind in einer der Stirnflächen, welche die Öffnungsseiten bilden, Ausnehmungen eingebracht, so dass nach dem Einschieben des Gleichlaufgelenkes in die Glocke diese so verformt wird, dass dieses in die Ausnehmungen eindringt und somit eine drehfeste Verbindung hergestellt werden soll.
Bei dieser vorgestellten Lösung handelt es sich um einen Spezialfall, bei dem ein besonders gestaltetes Gleichlaufgelenk in der Glocke Aufnahme findet und somit eine Mehrfachverwendung dieser Lösung nicht möglich ist.

Eine Anordnung mit einem Gleichlaufgelenk und einem Aufnahmeteil beschreibt die DE 199 11 113 C1, bei der das Gleichlaufgelenk auf seiner Außenfläche Zentrierflächen besitzt, mit der das Außenteil in einer Zentrierbohrung des Aufnahmeteiles zentriert aufgenommen werden soll und über einen Flansch das Außenteil mit einem Aufnahmeteil verbunden wird.
Das Außenteil ist aus einem Blech geformt, besitzt an einem axialen Ende einen angeformten Flansch und ist zum anderen axialen Ende außen mit einer zylindrischen Zentrierfläche versehen, wobei des Weiteren der Flansch Durchgangsbohrungen für Befestigungsschrauben aufweist und mit einem Aufnahmeteil ausgebildet ist. Über Befestigungsschrauben und Gewindebohrungen ist das Außenteil zum Aufnahmeteil verbunden.

Nachteilig bei dieser Lösung ist, dass das fertig montierte Gleichlaufgelenk vor seiner Montage ein so genanntes offenes Gleichlaufgelenk ist und somit während der Lagerung und der Montage nicht geschützt ist vor Verunreinigungen und auch nicht gewährleistet wird, dass in dem Gleichlaufgelenk bereits eingebrachtes Schmiermittel austreten kann.

Erst durch die Montage des Gleichlaufgelenkes zu dem Aufnahmeteil wird ein geschlossenes System realisiert, wobei dieses Gleichlaufgelenk auch nur in ein speziell ausgebildetes Aufnahmeteil einsetzbar ist, somit eine Variierbarkeit nicht gegeben ist.

Aufgabe der Erfindung ist es, ein Aufnahmegehäuse für Gleichlaufgelenke derart weiterzuentwickeln, in welche als Fest- oder Verschiebegelenk ausgebildete Gleichlaufgelenke einsetzbar sowie beidseitig abdichtend Aufnahme finden und direkt zu anderen Baugruppen anordbar sind.

Erfindungsgemäß wird diese Aufgabe mit den Merkmalen des Anspruches 1 gelöst und besondere Ausgestaltungen und vorteilhafte Lösungen sind in den Unteransprüchen angegeben.

So wurde ein Aufnahmegehäuse geschaffen, welches in kombinierter Ausbildung aus einem Aufnahmegehäuseteil mit einem im Aufnahmegehäuseteil angeordneten Verschlussdeckel besteht, wobei im Aufnahmegehäuseteil ein Gleichlaufgelenk, ausgebildet als Fest- oder Verschiebegelenk, einsetzbar ist, über den Außenring zur Innenwandung des Aufnahmegehäuseteiles kraft- und formschlüssig verbunden ist und durch den im Aufnahmegehäuseteil vorgesehenen Verschlussdeckel linksseitig, beispielsweise zur Getriebeseite eines Kraftfahrzeuggetriebes, abgedichtet wird. Auf der gegenüberliegenden Seite des Aufnahmegehäuses wird das im Aufnahmegehäuseteil vorgesehene Gleichlaufgelenk über einen Faltenbalg abgedichtet.
Sowohl das Aufnahmegehäuseteil als auch der darin fest oder auswechselbar angeordnete Verschlussdeckel sind mit unterschiedlich gestalteten Anschlusselementen ausgebildet, über die das Aufnahmegehäuse mit dem eingesetzten Gleichlaufgelenk zu anderen Aggregaten, beispielsweise einem Getriebe, angeschlossen/verbunden ist.

Die zum Einsatz kommenden Gleichlaufgelenke sind in bekannter Art und Weise ausgebildet und bestehen aus einem Innenteil sowie einem Außenring, zwischen denen der Käfig mit den darin umlaufenden Wälzkörpern vorgesehen ist. Die Wälzkörper laufen dabei in Laufrillen um, die sowohl im Innenteil als auch im Außenring des Gleichlaufgelenkes vorgesehen sind.
Die Ausgestaltungen der Laufbahnen sind entsprechend der Gattung des Gleichlauf gelenkes ausgeführt, so dass diese als Fest- oder Verschiebegelenke eingesetzt werden können.

Die Anordnung und Arretierung des Gleichlaufgelenkes im Aufnahmegehäuseteil erfolgt über Nuten und Mitnehmernasen, welche im Außenring des Gleichlaufgelenkes und an der Innenwandung vom Aufnahmegehäuseteil angeordnet sind, dies in der Art und Weise, dass das Gleichlaufgelenk über dessen Außenring zu den Mitnehmernasen des Aufnahmegehäuseteiles fixiert wird. Die Festsetzung des Außenringes in axialer Richtung erfolgt dabei auf der einen Seite über den Ansatz vom Mitnehmergehäuseteil und auf der gegenüberliegenden Seite durch den eingesetzten Verschlussdeckel, der mit seinem äußeren Bund auf den Außenring des Gleichlaufgelenkes wirkt, welcher zum Mitnehmergehäuseteil am Ansatz vom Mitnehmergehäuseteil anliegt. Somit ist eine Fixierung und Festsetzung des Gleichlaufgelenkes gewährleistet.

Der Anschluss eines Aufnahmegehäuses mit integriertem Gleichlaufgelenk zu einer Baugruppe eines Kraftfahrzeuges, beispielsweise einem Getriebe oder einer Welle, beispielsweise einer Kardanwelle, erfolgt über die besonders gestalteten Anschlusselemente dieser Anordnung, welche links- oder rechtsseitig an der Stirnseite des Aufnahmegehäuseteiles und dem Verschlussdeckel vorgesehen sind.

Gemäß der Erfindung sind die Anschlusselemente in Form von Flanschaugen oder in Form von Schweißansätzen ausgebildet.
Die Flanschaugen sind dabei in Abhängigkeit der jeweiligen Lochbilder vom Getriebe am äußeren Umfang des Aufnahmegehäuseteils angeordnet. Über durchsteckbare Schrauben wird so das Aufnahmegehäuse mit dem Gleichlaufgelenk zum Getriebe befestigt, wobei der Vorteil besteht, dass durch diese Schraubverbindung eine leichte Montage und Demontage gewährleistet wird und auch die Auswechselbarkeit von eventuellen Verschleißteilen ohne großen Demontageaufwand realisierbar ist.

In einer anderen Ausführungsvariante sind die Anschlusselemente des Aufnahmegehäuses als Schweißansätze ausgebildet, die am Aufnahmegehäuseteil und am Verschlussdeckel vorgesehen sind. Bei dieser Ausführung ist das Gleichlaufgelenk am Rohr einer Welle, so einer Kardanwelle, angeschweißt und die Verbindung zum Getriebe erfolgt über das Innenteil des Gleichlaufgelenkes.

Durch diese Ausbildung der Befestigungsmöglichkeiten ist der Vorteil verbunden, dass in dem Aufnahmegehäuse ein einheitliches Gleichlaufgelenk universell einsetzbar ist.
Das im Aufnahmegehäuse vorgesehene Gelenk wird sowohl durch das Aufnahmegehäuseteil als auch durch den darin befindlichen Verschlussdeckel und den Faltenbalg vollständig gekapselt und so vor Umwelteinflüssen geschützt.
Durch die Anordnung des Verschlussdeckels im Aufnahmegehäuseteil, in lösbarer oder dauerhafter Form, je nachdem ob eine Regenerierbarkeit bzw. Zerlegbarkeit erwünscht wird, werden weitere Vorteile der Erfindung begründet.

Mit nachfolgendem Ausführungsbeispiel soll die Erfindung näher erläutert werden.

### Die dazugehörige Zeichnung zeigt in

- Figur 1:: eine Schnittansicht eines Aufnahmegehäuses mit integriertem Gleichlaufgelenk,
- Figur 2:: Einzelteile bzw. einzelne Teilgruppen der Darstellung nach Figur 1 in einer Schnittdarstellung,
- Figur 3:: in zwei Explosionszeichnungen die Einzelteile einzelner Teilbaugruppen in perspektivischer Ansicht und in einer Halbschnittdarstellung nach Figur 1,
- Figur 4:: eine Schnittdarstellung eines Aufnahmegehäuses mit integriertem Gleichlaufgelenk mit als Schweißansätzen ausgebildeten Anschlusselementen,
- Figur 5:: Einzelteile bzw. einzelne Teilbaugruppen der Darstellung nach Figur 4 in Schnittansicht und
- Figur 6:: in zwei Explosionszeichnungen die Einzelteile und die einzelnen Teilbaugruppen in perspektivischer Ansicht und in einer Halbschnittdarstellung nach Figur 4.

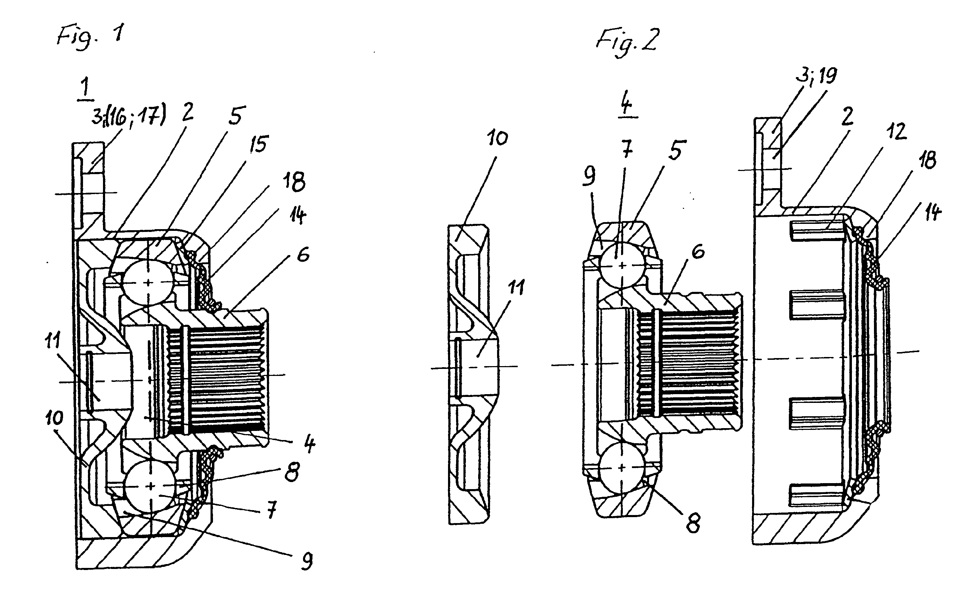

Das Aufnahmegehäuse 1 mit einem eingesetzten Gleichlaufgelenk 4, hier ausgebildet als ein Festgelenk, ist in seiner Gesamtheit in der Figur 1 und in Einzelteilen bzw. Einzelteilgruppen in der Figur 2 dargestellt, auf die im Weiteren Bezug genommen wird.

So ergibt sich aus den Darstellungen der Figuren 1 und 2 die Ausbildung des Aufnahmegehäuses 1, welches topfartig gestaltet ist, dies begründet durch die Ausbildung des Aufnahmegehäuseteiles 2, welches rechtsseitig, in Richtung einer anzuschließenden Längswelle, mit einem Ansatz 18 ausgebildet ist.
Auf der gegenüberliegenden Seite ist das Aufnahmegehäuse 1 flächig ausgebildet. Dies ist die Anschlussseite des Aufnahmegehäuses 1 zu einem Aggregat eines Kraftfahrzeuges, beispielsweise zum Anschluss an ein Getriebe.

Im Aufnahmegehäuseteil 2 ist ein Verschlussdeckel 10 angeordnet, der sowohl fest als auch auswechelbar im Aufnahmegehäuseteil 2 einsetzbar ist.
Flanschseitig der Anschlussseite des Aufnahmegehäuses 1 ist das Aufnahmegehäuse 1 mit Anschlusselementen 3; 16; 17 ausgebildet, über die das Aufnahmegehäuse 1 mit dem darin geordneten Gleichlaufgelenk 4 zu einem Getriebe oder einer anderen Baugruppe befestigbar ist.

Das Gleichlaufgelenk 4 besteht in bekannter Weise aus einem Innenteil 6, einem Außenring 5, beide Teile sind mit Laufbahnen 9 ausgebildet, in denen die Wälzkörper 7, geführt mittels eines vorgesehenen Käfigs 8, angeordnet sind. Die Laufbahnen 9 sind gekrümmt ausgebildet und verleihen dem Gleichlaufgelenk eine gewisse Beweglichkeit, die in Form eines Beugewinkels festlegbar ist.

Der Verschlussdeckel 10 ist in der linken Darstellung der Figur 2 gezeigt und besitzt bei dieser Ausführung eine Zentrierbohrung 11, mittels der das gesamte Aufnahmegehäuse 1, einschließlich des Gleichlaufgelenkes 4, zu einem Zapfen eines Getriebes positionierbar ist. Dies ist eine Ausführungsmöglichkeit, die auf Kundenwunsch oder im Bedarfsfall in Abhängigkeit des Einsatzes des Gleichlaufgelenkes 4 mit dem Aufnahmegehäuse 1 wählbar gestaltet werden kann.

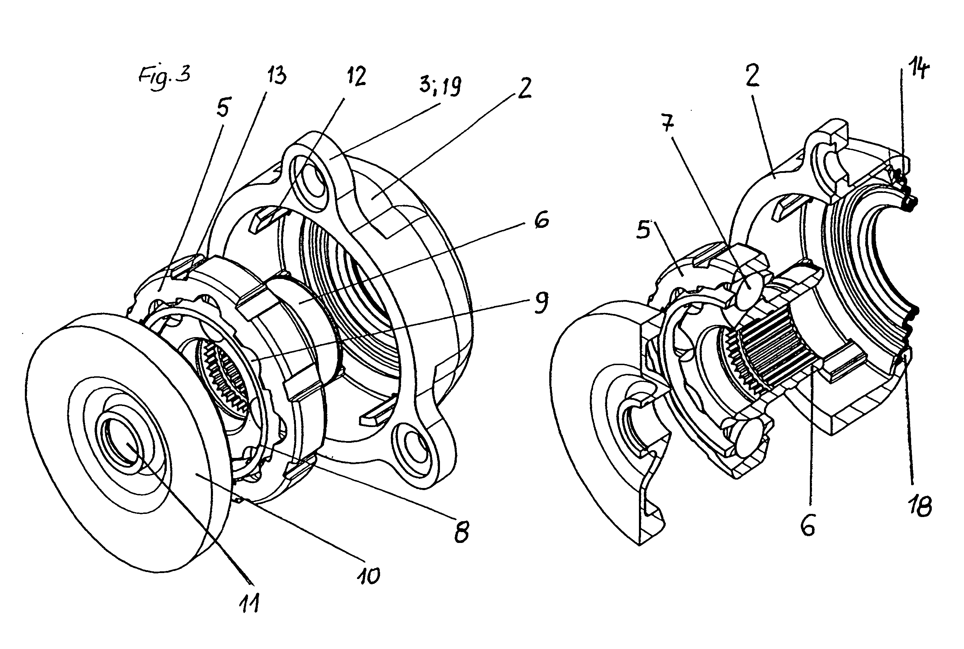

Aus der rechten Darstellung nach Figur 2 ergibt sich die Ausbildung des Aufnahmegehäuses 1, in der gezeigt ist, dass im Aufnahmegehäuseteil 2 an dessen Innenwandung Mitnehmernasen 12 angeordnet sind, zu denen das einzusetzende Gleichlaufgelenk 4 mit seinen im Außenring 5 vorgesehenen Nuten 13 form- und kraftschlüssig einsetzbar ist. Die Ausbildung und Anordnung der Nuten 13 im Außenring 3 ist im Detail in der Figur 3 gezeigt.
Aus der Figur 1 ergibt sich neben der Anordnung des Gleichlaufgelenkes 4 im Aufnahmegehäuse 1 die Festsetzung und Abdichtung des Gleichlaufgelenkes 4 im Aufnahmegehäuseteil 2. Dies erfolgt derart, dass beim Einsatz des Gleichlaufgelenkes 4 in das Auf nahmegehäuseteil 2 der Außenring 5 vom Gleichlaufgelenk 4 rechtsseitig an dem Ansatz 18 zur Anlage kommt und linksseitig der Außenring 5 mittels des eingesetzten Verschlussdeckels 11 fixiert und festgesetzt ist.
Mit der vorgestellten Lösung ist der Vorteil verbunden, dass im Bedarfsfall zur Geräuschminderung und zur Entkopplung des Gleichlaufgelenkes 4 zum Aufnahmegehäuseteil 2 zwischen dem Gleichlaufgelenk 4 und dem Aufnahmegehäuseteil 2 ein Dämpfungselement einsetzbar ist.

Wie in der Figur 1 und auch in der rechten Darstellung der Figur 2 gezeigt, ist zur rechtsseitigen Abdichtung des Gleichlaufgelenkes 4 ein Faltenbalg 14 vorgesehen, der zum einen auf dem äußeren Bund des Innenteiles 6 vom Gleichlaufgelenk 4 und zum anderen in seinem äußeren Bereich zwischen dem Ansatz 18 und dem eingesetzten Gleichlaufgelenk 4 befestigt ist.
Wie bereits oben ausgeführt, ist das Aufnahmegehäuse 1 mit Anschlusselementen 3; 16; 17 ausgebildet, über die das Aufnahmegehäuse 1 mit dem eingesetzten Gleichlaufgelenk 4 zu anderen Baugruppen befestigt werden kann. Die Darstellungen nach den Figuren 1 und 2 zeigen die Ausbildung des Anschlusselementes 3 in Form von Flanschaugen 19, die umfangsseitig am Aufnahmegehäuseteil 2 angeordnet sind.

In der perspektivischen Ansicht nach Figur 3 wird die Ausbildung und Anordnung der Anschlusselemente 3 in Form von Flanschaugen 19 besonders deutlich dargestellt.

Aus dieser Figur 3 ergibt sich gleichfalls, wie beim Fügen des Gleichlaufgelenkes 4 in das Aufnahmegehäuseteil 2 die Nuten 13 vom Außenring 5 zu den Mitnehmernasen 12 positioniert sind und nach dem Fügen dann eine formschlüssige und kraftschlüssige Verbindung zwischen dem Mitnahme-/Aufnahmegehäuseteil 2 und dem Gleichlaufgelenk 4 erzielt wird. Das Abdichten und Verschließen des Aufnahmegehäuses 1 und des eingesetzten Gleichlaufgelenkes 4 erfolgt über den Verschlussdeckel 10, der im Aufnahmegehäuseteil 2 vom Aufnahmegehäuse 1 eingesetzt ist.
Die rechte Abbildung in der Figur 3 verdeutlicht in ihrer Darstellung nochmals wie die einzelnen Funktionsteile zueinander gefügt werden und es ist auch sehr deutlich gezeigt, dass der Faltenbalg 14 zwischen dem Außenring 5 und dem äußeren Ansatz 18 vom Aufnahmegehäuseteil 2 eingesetzt ist und es wird auch ersichtlich, dass der Faltenbalg 14 zum Innenteil 6, wenn das Gleichlaufgelenk 4 in das Aufnahmegehäuseteil 2 eingesetzt ist, zu diesem befestigt werden kann.

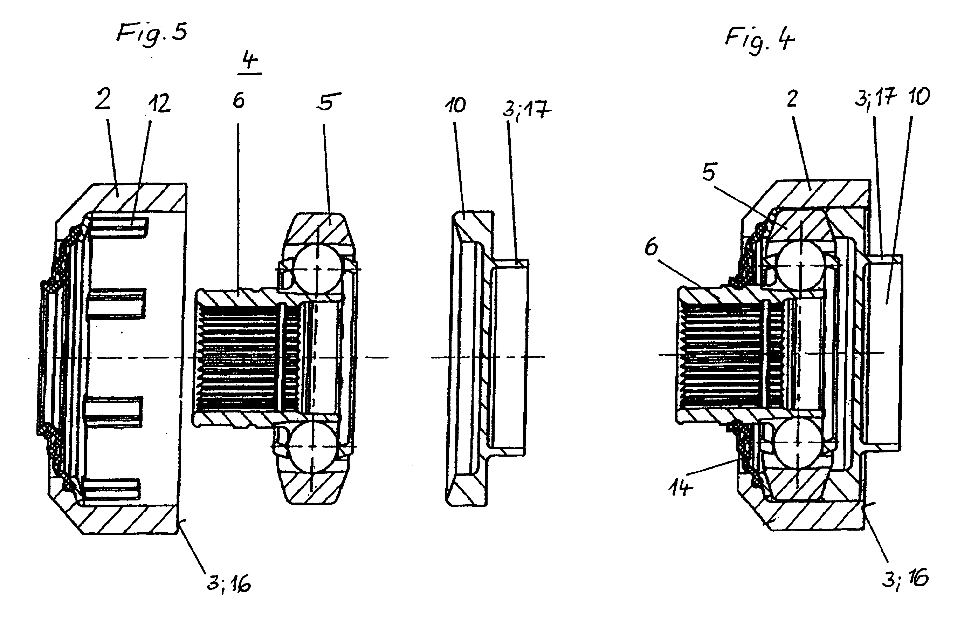

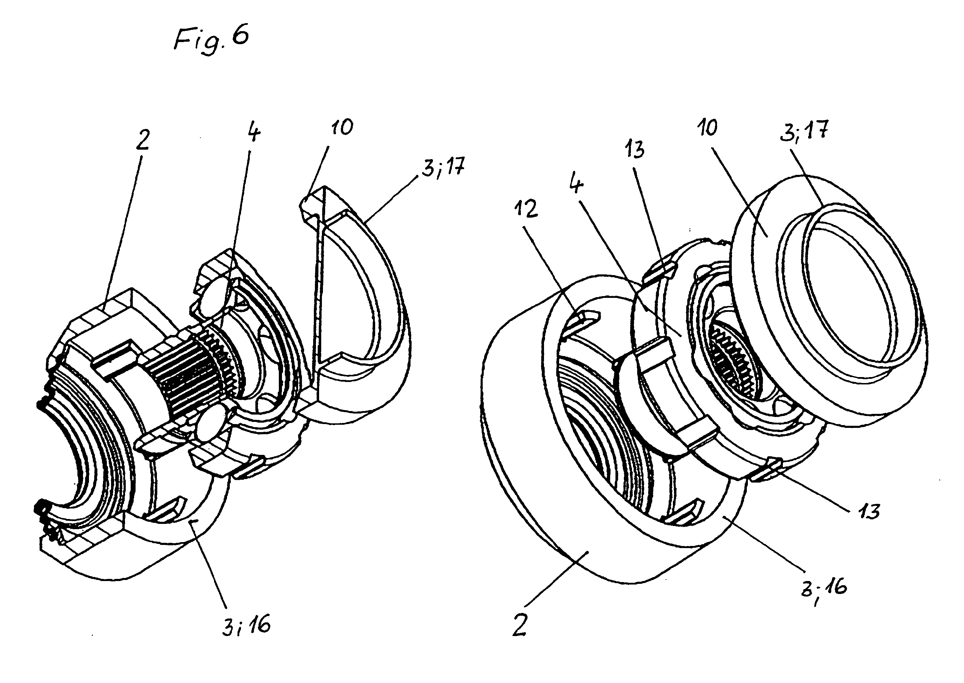

Die Ausbildung und die Anordnung der Anschlusselemente 16; 17 zur Befestigung bzw. Verbindung des Aufnahmegehäuses 1 mit dem Gleichlaufgelenk 4 zu beispielsweise einem Getriebe und einer Welle, ist in den Figuren 4 bis 6 gezeigt, aus denen sich auch ergibt, dass das Aufnahmegehäuse 1 mit dem darin angeordneten Gleichlaufgelenk 4 der Ausführung entspricht, wie oben beschrieben und in den Figuren 1 bis 3 gezeigt, wobei auch bei dieser Ausführung die Verbindung zu einem Getriebe über das Innenteil 6 des Gleichlaufgelenkes 1 erfolgt.

Mit den Darstellungen nach den Figuren 4 bis 6 soll dokumentiert und erläutert werden, wie die Anschlusselemente 16; 17 ausgebildet sind und wie das Aufnahmegehäuse 1 mit dem jeweils eingesetzten Gleichlaufgelenk 4 zu einem anderen Bauteil, beispielsweise einer Welle über die als Schweißansätze ausgebildeten Anschlusselemente 16; 17 verbunden werden kann, wodurch die Variierbarkeit und die breite Anwendung der geschaffenen Lösung gegeben ist.
So werden in den Figuren 4 bis 5 die Ausbildung und Anordnung der Anschlusselemente 3 in Form von Schweißansätzen 16; 17 gezeigt, die rechtsseitig am Mitnahmegehäuseteil 2 und am Verschlussdeckel 10 vorgesehen sind.

So besteht die Möglichkeit, dass das Aufnahmegehäuse 1 mit dem eingesetzten Gleichlaufgelenk 4 direkt über den Schweißansatz 16 zu einem anderen Bauteil/Baugruppe mittels eines Schweißvorganges verbunden werden kann.

Eine weitere Ausführungsvariante der Verbindung des Aufnahmegehäuses 1 zu einer Funktionsbaugruppe erfolgt über den Schweißansatz 17, welcher rechtsseitig am flächigen Teil des Verschlussdeckels 10 vorgesehen ist.
Bei der Ausbildung des Verschlussdeckels 10 mit dem Schweißansatz 17 ist der Verschlussdeckel 10 vollflächig gestaltet, so dass gleichfalls gewährleistet ist, dass das im Aufnahmegehäuse 1 vorgesehene eingesetzte Gleichlaufgelenk 4 auch abgedichtet und vor Verunreinigungen geschützt ist.

Durch die unterschiedliche Ausbildung der Anschlusselemente 3; 16; 17 des Aufnahmegehäuses 1 und durch dessen Bauform können verschiedene Fest- oder Verschiebegelenke unterschiedlicher Bauart eingesetzt werden, wodurch mit wenigen Bauteilen/Baugruppenteilen eine Vielzahl an Kombinationsmöglichkeiten der Verbindung von Längswellen zu anderen Baugruppen von Kraftfahrzeugen realisiert werden können.

## Patentansprüche

1. Aufnahmegehäuse für Gleichlaufgelenke, welche als Fest- oder Verschiebegelenke ausgebildet sind, für den Einsatz in Kraftfahrzeugen zur Drehmomentenübertragung, die eingebundenen Gleichlaufgelenke über ihre Außenringe mit dem Aufnahmegehäuse verbunden sind, **dadurch gekennzeichnet, dass**
das Aufnahmegehäuse (1) in kombinierter Ausbildung aus einem Aufnahmegehäuseteil (2) mit im Aufnahmegehäuseteil (2) angeordnetem Verschlussdeckel (10) besteht, im Aufnahmegehäuseteil (2) ein Gleichlaufgelenk (4) über den Außenring (5) zur Innenwandung des Aufnahmegehäuseteiles (2) kraft- und formschlüssig angeordnet ist und das Aufnahmegehäuseteil (2) sowie der Verschlussdeckel (10) mit unterschiedlich gestalteten Anschlusselementen (3) ausgebildet sind.

2. Aufnahmegehäuse nach Anspruch 1, **dadurch gekennzeichnet, dass**
an der Innenwandung vom Aufnahmegehäuseteil (2) in umfänglicher Anordnung und in festgelegten Abständen Mitnehmernasen (12) angeordnet sind und der Außenring (5) vom Gleichlaufgelenk (4) mit zu den Mitnehmernasen (12) deckungsgleichen Nuten (13) ausgebildet ist.

3. Aufnahmegehäuse nach Anspruch 1, **dadurch gekennzeichnet, dass**
der Verschlussdeckel (10) in geschlossener Form oder mit einer Zentrierbohrung (11) ausgebildet ist.

4. Aufnahmegehäuse nach den Ansprüchen 1 bis 3, **dadurch gekennzeichnet, dass**
das Aufnahmegehäuseteil (2) topfartig ausgebildet ist, in dem der Verschlussdeckel (10) fest oder auswechselbar, je nach Anordnung dieses links- oder rechtsseitigen Gleichlaufgelenkes (4) abdichtend und den Außenring (5) axial fixierend, angeordnet ist und der Außenring (5) vom Gleichlaufgelenk (4) an dem Ansatz (18) vom Aufnahmegehäuseteil (2) anliegt.

5. Aufnahmegehäuse nach Anspruch 1, **dadurch gekennzeichnet, dass**
das Gleichlaufgelenk (4) jeweils in Richtung zu einer Längswelle, mittels eines eingebundenen Faltenbalges (14) abgedichtet ist.

6. Aufnahmegehäuse nach Anspruch 1, **dadurch gekennzeichnet, dass**
das Anschlusselement (3) als Flanschanschluss in Form von am äußeren Umfang vom Aufnahmegehäuseteil (2) angeordneten Flanschaugen (19) ausgebildet ist.

7. Aufnahmegehäuse nach Anspruch 1, **dadurch gekennzeichnet, dass**
das Anschlusselement (3) als ein stirnseitig am Aufnahmegehäuse (2) ausgebildeter Schweißansatz (16) gestaltet ist.

8. Aufnahmegehäuse nach Anspruch 1, **dadurch gekennzeichnet, dass**
das Anschlusselement (3) als ein am Verschlussdeckel (10) ringförmig gestalteter Schweißansatz (17) ausgebildet ist.
